# EUROPÄISCHE PATENTSCHRIFT

(11) **EP 3 669 969 B1**
(45) Veröffentlichungstag und Bekanntmachung des Hinweises auf die Patenterteilung: **26.07.2023**
(21) Anmeldenummer: 19213391.6
(22) Anmeldetag: 04.12.2019
(51) Int. Cl.: B01D 53/26, B01D 53/52, F26B 17/02, F26B 25/00

(54) **TROCKNUNGSANLAGE SOWIE VERFAHREN ZUM TROCKNEN EINES FEUCHTEN GUTS**
DRYING SYSTEM AND METHOD FOR DRYING A WET GOOD
INSTALLATION ET PROCÉDÉ DE SÉCHAGE D'UN PRODUIT HUMIDE

(30) Priorität: 18.12.2018 DE 102018132641
(43) Veröffentlichungstag der Anmeldung: 24.06.2020
(73) Patentinhaber: Huber SE, 92334 Berching (DE)
(72) Erfinder: Ostermann, Stefan, 92353 Postbauer-Heng (DE)
(74) Vertreter: Canzler & Bergmeier Patentanwälte Partnerschaft mbB

(56) Entgegenhaltungen:
- WO-A1-2006/118369
- WO-A1-2014/201487
- CN-A- 103 920 378
- CN-A- 106 237 836
- DE-A1- 4 205 619
- DE-A1- 10 119 991
- DE-A1-102010 001 859
- US-B1- 6 365 099

## Beschreibung

Die vorliegende Erfindung betrifft eine Trocknungsanlage zum Trocknen eines schwefelhaltigen feuchten Guts, insbesondere Klärschlamm, wobei die Trocknungsanlage einen Trocknungsraum mit einem Einlass für das feuchte Gut und einem Auslass für das in dem Trocknungsraum getrocknete Gut umfasst, und wobei die Trocknungsanlage einen Kondensator umfasst, der derart mit dem Trocknungsraum in Verbindung steht, dass beim Betrieb der Trocknungsanlage im Trocknungsraum entstehende feuchte Luft aus dem Trocknungsraum abführbar und dem Kondensator zum Zwecke deren Trocknung zuführbar ist.

Ferner wird ein Verfahren zum Trocknen von feuchtem Gut, insbesondere Klärschlamm, mit Hilfe einer Trocknungsanlage vorgeschlagen, wobei das feuchte Gut über einen Einlass in einen Trocknungsraum der Trocknungsanlage eingebracht und nach dem Trocknungsvorgang über einen Auslass aus dem Trocknungsraum abgeführt wird, und wobei die beim Betrieb der Trocknungsanlage im Trocknungsraum entstehende feuchte Luft aus dem Trocknungsraum abgeführt, einem Kondensator zugeführt und dort getrocknet wird.

Gattungsgemäße Trocknungsanlagen sind im Stand der Technik bekannt und dienen der Reduzierung des Wassergehalts eines feuchten Guts, wie beispielsweise von Klärschlamm. Im Fall von Klärschlamm ist es wichtig, diesen zu trocknen, bevor er einer thermischen Verwertung, d.h. einer Klärschlammverbrennung, zugeführt werden kann.

Bekannt sind in diesem Zusammenhang beispielsweise Kontakttrockner oder Bandtrockner, bei denen der feuchte Klärschlamm auf ein Förderband aufgegeben wird und mit Hilfe des Förderbands langsam durch den Trocknungsraum bewegt wird. Innerhalb des Trocknungsraumes wird dem feuchten Gut Wärme zugeführt, um im Gut vorhandenes Wasser zu verdampfen und damit den Feuchtegehalt des Guts zu reduzieren.

DE 4205619 A1 offenbart eine bekannte Trocknungsanlage.

DE 10119991 A1 offenbart eine bekannte Gasreinigungsvorrichtung.

Neben Wasser verdampfen hierbei auch andere im schwefelhaltigen Gut vorhandene flüchtige Komponenten, so dass die im Trocknungsraum entstehende bzw. vorhandene Luft auch schwefelhaltige Verbindungen, insbesondere in Form von Schwefelwasserstoff (H₂S), enthält. Werden nun der Wasserdampf sowie die vom Wasserdampf mitgeführten flüchtigen Komponenten dem Kondensator der Trocknungsanlage zugeführt, so werden im Kondensator nicht nur der Wasserdampf, sondern auch (zumindest teilweise) die zuvor verdampften flüchtigen Komponenten abgeschieden.

Bei der auch im Rahmen der vorliegenden Erfindung zum Einsatz kommenden Trocknungsanlage werden die Feuchte sowie die flüchtigen Komponenten des zu trocknenden Guts innerhalb des Trocknungsraums mit Hilfe eines erwärmten Luftstromes aufgenommen und aus dem Trocknungsraum abgeführt. Die mit Wasserdampf und sonstigen verdampften flüchtigen Komponenten angereicherte Luft wird im Folgenden teilweise auch als Brüden bezeichnet.

Die entsprechend angereicherte Luft wird nach Verlassen des Trocknungsraums mittels des genannten Kondensators wieder von der aufgenommenen Feuchtigkeit befreit und erneut dem Trocknungsraum zugeführt. Die zum Trocknen des feuchten Guts zum Einsatz kommende Luft wird somit, vorzugsweise auch im Rahmen der vorliegenden Erfindung, nahezu vollständig im Kreislauf geführt.

Durch chemische Oxidation des aus dem Gut entweichenden Schwefelwasserstoffs kann es hierbei zur Bildung von elementarem Schwefel kommen. Dieser setzt sich innerhalb des Kondensators ab und führt zu Betriebsproblemen. Ausfallzeiten für Reinigung sowie gesteigerte Kosten sind die Folge.

Aufgabe der vorliegenden Erfindung ist es, eine wie oben beschriebene Trocknungsanlage sowie ein entsprechendes Verfahren zum Trocknen von feuchtem Gut in verbesserter Form vorzuschlagen.

Die Aufgabe wird gelöst durch eine Trocknungsanlage sowie ein Verfahren mit den Merkmalen der unabhängigen Patentansprüche.

Erfindungsgemäß zeichnet sich die Trocknungsanlage zum Trocknen eines schwefelhaltigen feuchten Guts dadurch aus, dass die Trocknungsanlage eine Dosieranordnung umfasst. Die Dosieranordnung umfasst eine Laugenzufuhr und ist ausgebildet, der feuchten Luft vor und/oder im Kondensator Lauge (d.h. eine Flüssigkeit mit einem pH-Wert von mehr als 7) zuzuführen. Die Lauge stammt aus einer Laugenzufuhr, die mit einem Laugentank in Verbindung steht oder einen solchen umfasst. Der Laugentank kann Bestandteil der Trocknungsanlage sein. Ebenso ist es denkbar, dass der Laugentank nicht Teil der Trocknungsanlage ist, sondern mit einer Laugenleitung mit der Dosieranordnung verbunden ist. Vorzugsweise wird die Lauge mit der Flüssigkeit vermischt, die im Kondensator durch Kondensation von flüchtigen bzw. gasförmigen Bestandteilen der in den Kondensator eintretenden feuchten Luft entsteht bzw. die in den Kondensator eingebracht wird, um die feuchte Luft abzukühlen. Vorzugsweise handelt es sich bei der im folgenden genannten Flüssigkeit aus einer Mischung aus beidem. Die aufgrund der Laugenzugabe laugenhaltige Flüssigkeit wird anschließend mit der feuchten Luft in Kontakt gebracht.

Um einen intensiven Austausch zwischen laugenhaltiger Flüssigkeit und der feuchten Luft herzustellen, werden Sprühdüsen eingesetzt, mit deren Hilfe die laugenhaltige Flüssigkeit in die feuchte Luft einspritzbar ist. Die Sprühdüse(n) befindet bzw. befinden sich vorzugsweise in einem Leitungsabschnitt, der den Trocknungsraum und den Kondensator miteinander verbindet und/oder innerhalb des Kondensators.

Innerhalb des Kondensators kondensieren schließlich in der Luft vorhandener Wasserdampf sowie weitere in der feuchten Luft mitgeführte Komponenten des Brüdens.

Vorzugsweise kommt als Lauge eine Natriumhydroxid-Lösung (NaOH) zum Einsatz, wobei selbstverständlich auch andere Laugen Verwendung finden können.

Die Lauge bewirkt eine Erhöhung des pH-Werts des Brüdens.

Darüber hinaus ist vorgesehen, dass die Dosieranordnung eine Oxidationsmittelzufuhr umfasst. Die Dosieranordnung ist in diesem Fall zusätzlich ausgebildet, der genannten Flüssigkeit ein Oxidationsmittel (gasförmig oder flüssig) zuzuführen, welches aus der Oxidationsmittelzufuhr stammt. Bei einem Oxidationsmittel (auch Oxidans oder Oxidator) handelt es sich um einen Stoff, der andere Stoffe oxidieren kann und dabei selbst reduziert wird. Oxidationsmittel können Elektronen aufnehmen, während die Reduktionsmittel sie abgeben. Deshalb werden Oxidationsmittel auch als Elektronenakzeptoren bezeichnet.

Bei der Oxidationszufuhr handelt es sich entweder um einen mit Oxidationsmittel befüllten Vorrat im Bereich der Trocknungsanlage selbst oder um eine Leitung, die von einer externen Oxidationsmittelquelle Oxidationsmittel in die Trocknungsanlage befördert. Auch die Oxidationszufuhr umfasst einen Auslass für das Oxidationsmittel, um das Oxidationsmittel der oben genannten Flüssigkeit zuführen zu können.

Vorzugsweise wird ein Oxidationsmittel in Form von Wasserstoffperoxid (H₂O₂) zugeführt. Der in der aus dem Trocknungsraum stammenden feuchten Luft mitgeführte Schwefel (in Form von Schwefelwasserstoff) wird hierdurch in eine wasserlösliche Form überführt. Insbesondere wird verhindert, dass eine chemische Oxidation des im Brüden vorhandenen Schwefels (insbesondere des Schwefelwasserstoffs) zu elementarem Schwefel stattfindet. Der Schwefel kann sich somit nicht an Oberflächen vor oder innerhalb des Kondensators ablagern, so dass die im Stand der Technik auftretenden Nachteile vermieden werden.

Bei Zugabe von Lauge und Wasserstoffperoxid erfolgt vor oder innerhalb des Kondensators eine chemische Reaktion gemäß folgender Reaktionsgleichung:

H₂S + 2 NaOH + 4 H₂O₂ -> Na₂SO₄ + 6 H₂O

Das auf diese Weise gebildete Natriumsulfat verbleibt in löslicher Form im Kondensat. Die Bildung von elementarem Schwefel ist nahezu ausgeschlossen.

Ferner bringt es Vorteile mit sich, wenn die Trocknungsanlage einen oder mehrere Leitungsabschnitte umfasst, über den bzw. die der Kondensator mit dem Trocknungsraum verbunden ist. Der jeweilige Leitungsabschnitt kann beispielsweise durch eine Rohrleitung oder einen Kanal gebildet sein.

Zudem sind der oder die Leitungsabschnitte derart ausgebildet, dass Luft im Umluftbetrieb vom Trocknungsraum zum Kondensator und von dort wieder zurück in den Trocknungsraum bewegt werden kann. Der Kondensator steht also derart mit dem Trocknungsraum in Verbindung, dass Luft innerhalb des Trocknungsraums Feuchtigkeit aufnehmen und innerhalb des Kondensators wieder abgeben kann. Die durch den Kondensator getrocknete Luft strömt schließlich wieder zurück in den Trocknungsraum und nimmt dort erneut Feuchtigkeit von dem zu trocknenden Gut auf. Für die entsprechende Bewegung der Luft ist vorzugsweise ein Ventilator vorgesehen.

Besondere Vorteile bringt es mit sich, wenn die Laugenzufuhr einen Laugentank umfasst und/oder wenn die Oxidationsmittelzufuhr einen Oxidationstank umfasst. Bei dem Laugentank und/oder dem Oxidationstank handelt es sich jeweils um ein Behältnis, welches mit Lauge bzw. einem Oxidationsmittel befüllt ist. Der jeweilige Tank steht wiederum mit der Laugenzufuhr bzw. der Oxidationsmittelzufuhr in Verbindung (vorzugsweise über entsprechende Leitungen), so dass Lauge bzw. Oxidationsmittel vom jeweiligen Tank entnommen und der Flüssigkeit zugegeben werden kann, die im Kondensator mit der vom Trocknungsraum kommenden Luft in Kontakt gebracht wird.

Insbesondere ist es von Vorteil, wenn die Dosieranordnung eine oder mehrere Pumpen (beispielsweise in Form von einer oder mehreren Membranpumpen) umfasst oder mit einer solchen in Wirkverbindung steht, so dass die Lauge bzw. das Oxidationsmittel aus dem jeweiligen Tank mit Hilfe der Pumpe abgezogen und letztendlich über die genannte Flüssigkeit der feuchten Luft zugeführt werden kann.

Besonders vorteilhaft ist es, wenn die Trocknungsanlage einen pH-Sensor umfasst, mit dessen Hilfe der pH-Wert der genannten Flüssigkeit messbar ist. Ferner sollte der pH-Sensor mit einer Steuerung der Trocknungsanlage in Verbindung stehen, wobei die Steuerung ausgebildet ist, die Dosierung der Lauge bzw. des Oxidationsmittels in Abhängigkeit des pH-Werts der Flüssigkeit zu wählen bzw. zu regulieren. Hierdurch wird sichergestellt, dass bei möglichst geringem Laugenverbrauch die oben beschriebene Reaktion des Schwefelwasserstoffs sichergestellt ist.

Ebenso ist es von Vorteil, wenn die Trocknungsanlage einen Redox-Sensor umfasst, mit dessen Hilfe das Redoxpotential der Flüssigkeit messbar ist. Auch der Redox-Sensor sollte mit der genannten Steuerung in Verbindung stehen, wobei diese ausgebildet sein sollte, die Zugabe des Oxidationsmittels in die Flüssigkeit, die im Kondensator mit der feuchten Luft in Kontakt gebracht wird, auf Basis bzw. unter Berücksichtigung des mit Hilfe des Redox-Sensors ermittelten Redoxpotentials zu wählen bzw. zu regulieren.

Besondere Vorteile bringt es mit sich, wenn der pH-Sensor und/oder der Redox-Sensor in eine Wärmeträgerleitung oder in den Kondensator integriert sind und im Betrieb der Trocknungsanlage direkt mit der im Kondensator vorhandenen oder von diesem kommenden Flüssigkeit in Kontakt kommen. Die Wärmeträgerleitung verbindet den Kondensator mit einem Wärmetauscher, über den der Flüssigkeit Wärme entzogen werden kann. Insbesondere ist es von Vorteil, wenn die genannten Sensoren unmittelbar nach der Stelle platziert sind, an der der Flüssigkeit die Lauge und das Oxidationsmittel zugegeben werden. Der Abstand zwischen der genannten Stelle sowie den beiden Sensoren sollte weniger als 2 m, vorzugsweise weniger als 1 m, betragen.

Vorteile bringt es zudem mit sich, wenn der Kondensator als Sprühkondensator ausgebildet ist, wobei der Sprühkondensator Sprühdüsen aufweist, mit deren Hilfe Flüssigkeit von einer Flüssigkeitsquelle in die vom Trocknungsraum kommende feuchte Luft eindüsbar ist. Die eingesprühte Flüssigkeit bewirkt ein Abkühlen der feuchten Luft und damit ein Auskondensieren von in der Luft vorhandenen gasförmigen Komponenten, insbesondere von Wasserdampf. Die Flüssigkeit kommt in diesem Fall direkt mit der feuchten Luft in Kontakt.

Insbesondere ist es denkbar, dass der Kondensator eine Sammelstelle für das sich im Kondensator bildende Kondensat aufweist, wobei die Sammelstelle wiederum mit den Sprühdüsen in Verbindung steht, so dass das Kondensat zumindest teilweise im Kreislauf geführt werden kann. Um eine übermäßige Anreicherung des Kondensats bzw. der genannten Flüssigkeit innerhalb des Kondensators zu vermeiden, weist der Kondensator zusätzlich einen Kondensatüberlauf auf, über den Kondensat bzw. Flüssigkeit aus dem Kondensator austreten kann, so dass die Menge an Kondensat bzw. Flüssigkeit innerhalb des Kondensators in etwa konstant bleibt.

Besondere Vorteile bringt es mit sich, wenn die Dosieranordnung zumindest teilweise durch die Sprühdüsen gebildet ist. In diesem Fall ist es von Vorteil, wenn die Flüssigkeitsquelle und/oder die Sprühdüsen oder eine Verbindungsleitung, die die Flüssigkeitsquelle mit den Sprühdüsen verbindet, mit der Laugenzufuhr und/oder der Oxidationsmittelzufuhr in Verbindung stehen. Die Lauge und/oder das Oxidationsmittel können in diesem Fall direkt in die Flüssigkeit eingebracht werden, bevor diese über die Sprühdüsen in die feuchte Luft eingedüst wird. Die Flüssigkeit, die ein Kondensieren von gasförmigen Komponenten der feuchten Luft bewirkt, hat in diesem Fall bereits einen pH-Wert bzw. eine Oxidationsmittelkonzentration, die sicherstellen, dass in der feuchten Luft vorhandener Schwefel (insbesondere in Form von Schwefelwasserstoff) nicht als elementarer Schwefel ausfallen kann.

Das erfindungsgemäße Verfahren zum Trocknen von feuchtem Gut, insbesondere Klärschlamm, mit Hilfe einer Trocknungsanlage, vorzugsweise mit einer Trocknungsanlage gemäß bisheriger und nachfolgender Beschreibung, zeichnet sich durch folgende Merkmale aus:
Das zu trocknende schwefelhaltige feuchte Gut wird über einen Einlass kontinuierlich oder chargenweise in einen Trocknungsraum einer Trocknungsanlage eingebracht. Dort wird es mit Hilfe einer Wärmequelle, insbesondere mit Hilfe von erwärmter und zuvor getrockneter Luft, erwärmt, wodurch im Gut enthaltenes Wasser sowie weitere Komponenten verdampft werden und in die Gasphase übergehen.

Das getrocknete Gut wird nach dem Trocknungsvorgang über einen Auslass aus dem Trocknungsraum abgeführt. Auch die entstehende feuchte Luft, die unter anderem eine oder mehrere Schwefelverbindungen (beispielsweise in Form von Schwefelwasserstoff) enthält, wird aus dem Trocknungsraum abgeleitet und einem Kondensator zugeführt. Innerhalb des Kondensators erfolgt eine Abkühlung der feuchten Luft, so dass diese durch Kondensation von Wasserdampf getrocknet wird. Die derart getrocknete Luft kann anschließend erneut dem Trocknungsraum zugeführt werden, um dort wiederum Feuchtigkeit von sich im Trocknungsraum befindlichem feuchten Gut aufnehmen zu können.

Erfindungsgemäß ist nun vorgesehen, dass der feuchten Luft vor und/oder im Kondensator eine Lauge sowie ein Oxidationsmittel über die Flüssigkeit, die im Kondensator vorhanden ist bzw. dort anfällt, zugeführt werden. Hierdurch wird der in der feuchten Luft mitgeführte Schwefel (insbesondere Schwefelwasserstoff) in eine wasserlösliche Form überführt. Kommt als Lauge Natriumhydroxid und als Oxidationsmittel Wasserstoffperoxid zum Einsatz, so reagiert der Schwefelwasserstoff nach der oben angegebenen Reaktionsgleichung. Selbstverständlich ist auch der Einsatz von anderen Laugen bzw. anderen Oxidationsmitteln möglich, sofern der in der Luft mitgeführte Schwefel hierdurch in eine wasserlösliche Form überführt wird.

Insbesondere ist es vorteilhaft, wenn die Lauge und das Oxidationsmittel kontinuierlich in den vom Trocknungsraum kommenden und in den Kondensator geleiteten Luftstrom eingebracht werden, wobei die Zugabe vorzugsweise innerhalb des Kondensators erfolgt. Vorzugsweise kommt zudem ein flüssiges Oxidationsmittel zum Einsatz.

Ebenso bringt es Vorteile mit sich, wenn die aus dem Trocknungsraum abgeführte Luft nach dem Trocknen im Kondensator zumindest teilweise wieder zurück in den Trocknungsraum geleitet wird. Die Luft wird in diesem Fall im Kreislauf geführt, wobei sie im Trocknungsraum Feuchtigkeit aus dem zu trocknenden Gut sowie weitere aus diesem stammende Komponenten aufnimmt und diese zumindest größtenteils im Bereich des Kondensators wieder abgibt. Die im Kondensator getrocknete Luft strömt anschließend wieder zurück in den Trocknungsraum und kann erneut flüchtige Komponenten, insbesondere Wasserdampf, aufnehmen.

Besondere Vorteile bringt es mit sich, wenn der pH-Wert der Flüssigkeit im Kondensator bzw. der in den Kondensator einzubringenden Flüssigkeit ermittelt wird und die Dosierung der Lauge in Abhängigkeit des pH-Werts erfolgt. Hierdurch wird sichergestellt, dass bei möglichst geringem Laugenverbrauch die gewollte chemische Reaktion des sich in der Luft befindlichen Schwefels abläuft (siehe oben). Insbesondere erfolgt die Zugabe der Lauge mit Hilfe der bereits genannten Dosieranordnung, wobei diese vorzugsweise mit einer Steuerung in Verbindung steht und von dieser gesteuert wird. Die Steuerung sollte wiederum mit dem pH-Sensor verbunden sein, mit dem der pH-Wert der feuchten Luft ermittelt wird.

Ferner ist es von Vorteil, wenn die Dosierung des Oxidationsmittels in Abhängigkeit des Redoxpotentials der genannten Flüssigkeit erfolgt. Insbesondere sollte ein Redox-Sensor vorhanden sein, mit dessen Hilfe das genannte Redoxpotential innerhalb des Trocknungsraums oder zwischen dem Trocknungsraum und dem Kondensator oder innerhalb des Kondensators ermittelt werden kann. Je nach Betrag des Redoxpotentials wird schließlich das Oxidationsmittel in die feuchte Luft eindosiert, wobei der Volumenstrom bzw. der Massenstrom des zugegebenen Oxidationsmittels in Abhängigkeit des Redoxpotentials erfolgen sollte.

Ebenso ist es denkbar, den Volumenstrom bzw. Massenstrom des zugegebenen Oxidationsmittels stöchiometrisch in Abhängigkeit der zugegebenen Lauge bzw. des ermittelten pH-Werts der genannten Flüssigkeitzu wählen bzw. zu regulieren.

Vorteile bringt es zudem mit sich, wenn die Lauge und/oder das Oxidationsmittel der feuchten Luft innerhalb des Kondensators über Sprühdüsen zugeführt wird. Die Sprühdüsen dienen in diesem Fall neben der Zugabe der Lauge bzw. des Oxidationsmittels dem Einbringen der genannten Flüssigkeit. Diese entzieht der feuchten Luft bzw. den weiteren in der feuchten Luft mitgeführten Komponenten Wärme und bewirkt damit eine Kondensation von Wasserdampf oder sonstigen flüchtigen Komponenten innerhalb der feuchten Luft. Hierdurch erfolgt schließlich die Trocknung der feuchten Luft, so dass diese anschließend wieder dem Trocknungsraum zugeführt werden kann.

Bevor die Flüssigkeit, die sich im Kondensator ansammelt, erneut über die Sprühdüsen mit der feuchten Luft in Kontakt gebracht wird, ist es von Vorteil, wenn dieser zunächst Wärme entzogen wird. Dies kann beispielsweise über einen Wärmetauscher erfolgen, der die Wärme an anderer Stelle, beispielsweise im Bereich der Wärmequelle der Trocknungsanlage, wieder abgibt.

Weitere Vorteile der Erfindung sind in den nachfolgenden Ausführungsbeispielen beschrieben. Es zeigen, jeweils schematisch:
- **Figur 1**: ausgewählte Abschnitte einer erfindungsgemäßen Trocknungsanlage, und
- **Figur 2**: ausgewählte Abschnitte einer weiteren erfindungsgemäßen Trocknungsanlage

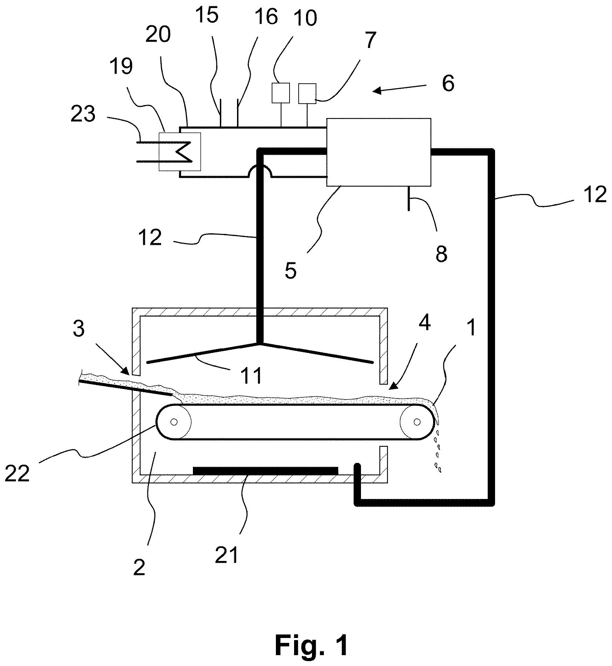

Figur 1 zeigt ausgewählte Komponenten einer Trocknungsanlage gemäß vorliegender Erfindung.

Die Trocknungsanlage umfasst generell einen Trocknungsraum 2, der (abweichend von der schematischen Darstellung) nach außen hin abgeschlossen ist. Der Trocknungsraum 2 umfasst einen Einlass 3, über den ein zu trocknendes Gut, insbesondere Klärschlamm 1, in den Trocknungsraum 2 eingebracht werden kann. Ebenso ist ein Auslass 4 vorhanden, über den das getrocknete Gut wieder aus dem Trocknungsraum 2 entfernt werden kann.

Innerhalb des Trocknungsraums 2 ist eine Trocknungsfläche vorhanden, die beispielsweise durch das gezeigte Transportband 22, das mit einem nicht gezeigten Antrieb in Verbindung steht, gebildet sein kann. Ebenso ist die Ausführung mit mehreren Transportbändern 22 denkbar, die insbesondere übereinander angeordnet sein können.

Um das feuchte Gut zu trocknen, weist die Trocknungsanlage eine Wärmequelle 21 auf, die beispielsweise als elektrische Wärmequelle oder als Wärmetauscheranordnung ausgebildet sein kann, über die dem Gut Wärme aus einer externen Quelle zugeführt werden kann.

Des Weiteren verfügt die Trocknungsanlage über eine Abzugseinrichtung für die während des Trocknungsprozesses entstehende feuchte Luft aus dem Trocknungsraum 2. Die Abzugseinrichtung kann beispielsweise als Absaughaube 11 ausgebildet sein, über die mit Hilfe eines nicht gezeigten Ventilators die feuchte Luft aus dem Trocknungsraum 2 abgezogen werden kann.

Während des Trocknungsvorgangs wird innerhalb des Trocknungsraums 2 nicht nur vom feuchten Gut mitgeführtes Wasser verdampft. Vielmehr gehen auch weitere flüchtige Komponenten, die aus dem feuchten Gut stammen, in die Gasphase über bzw. werden von dem Wasserdampf mitgerissen.

Hierzu zählt beispielsweise Schwefelwasserstoff. In der Vergangenheit hat sich gezeigt, dass es durch chemische Oxidation zu einem Ausfallen von elementarem Schwefel innerhalb der Trocknungsanlage, insbesondere in dem nachfolgend noch näher beschriebenen Kondensator 5, kommen kann, wobei dies zu signifikanten Beeinträchtigungen des Betriebsablaufs führen kann.

Um diesem Problem zu begegnen, ist nun gemäß vorliegender Erfindung vorgesehen, dass der aus dem Trocknungsraum 2 stammenden feuchten Luft eine Lauge sowie ein Oxidationsmittel zugegeben wird, wobei hierfür eine entsprechende Dosieranordnung 6 vorgesehen ist. Diese umfasst die nachfolgend beschriebene Laugenzufuhr 7 sowie die ebenfalls nachfolgend erwähnte Oxidationsmittelzufuhr 10 sowie insbesondere auch einen pH-Sensor 15 und einen Redox-Sensor 16.

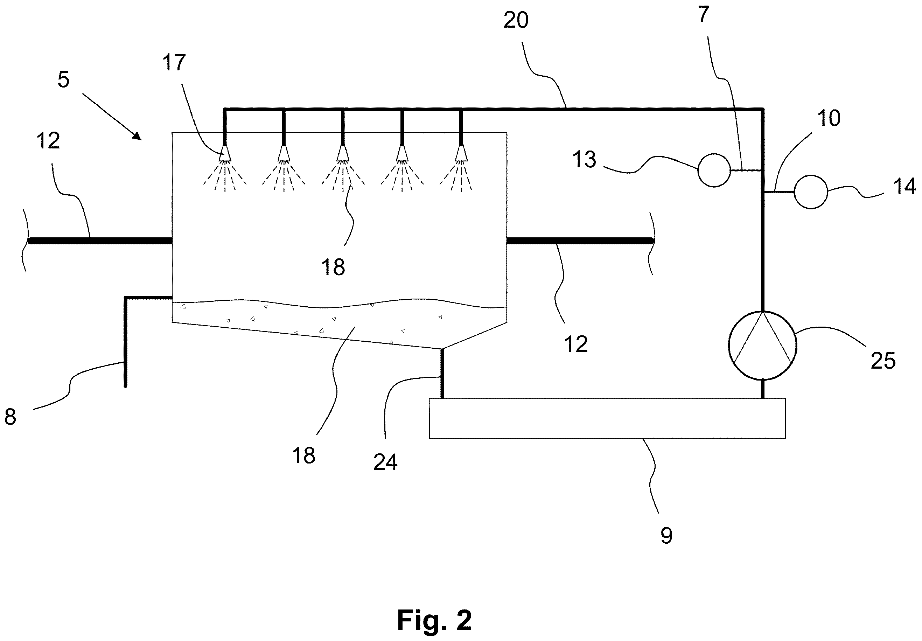

Die Zugabe der Lauge erfolgt hierbei über die genannte Laugenzufuhr 7, wobei diese einen lediglich in Figur 2 gezeigten Laugentank 13 zur Bevorratung von Lauge sowie einen Abgabeabschnitt (z.B. in Form einer Spritzdüse) aufweist, über den die Lauge aus der Laugenzufuhr 7 abgegeben werden kann, um mit der feuchten Luft in Kontakt zu treten.

Ferner ist eine Oxidationsmittelzufuhr 10 vorhanden, die wiederum einen ebenfalls nur in Figur 2 gezeigten Oxidationsmitteltank 14 und ebenfalls einen Abgabeabschnitt aufweist, über den ein Oxidationsmittel in die feuchte Luft abgegeben werden kann.

Durch die Erhöhung des pH-Werts aufgrund der Zugabe der Lauge sowie durch das Vorhandensein des Oxidationsmittels wird der im Schwefelwasserstoff vorhandene Schwefel in eine wasserlösliche Form überführt, so dass der Schwefel in die innerhalb des Kondensators 5 vorhandene Flüssigkeit 18 übergeht und mit diesem aus dem Kondensator 5 abgeführt werden kann. Der Kondensator 5 weist hierfür einen Kondensatablauf 8 auf.

Im Fall der Ausführung gemäß Figur 1 werden die Lauge sowie das Oxidationsmittel innerhalb des Kondensators 5 mit der feuchten Luft in Kontakt gebracht. Hierfür wird die Lauge und das Oxidationsmittel der Flüssigkeit 18 zugegeben, die in den Kondensator 5 eingesprüht und hierdurch mit der vom Trocknungsraum 2 kommenden feuchten Luft in Kontakt gebracht.

Ferner ist Figur 1 zu entnehmen, dass der Kondensator 5 über Flüssigkeitsleitungen 20 mit einem Wärmetauscher 19 verbunden sein kann. Über die Flüssigkeitsleitungen 20 strömt ein Wärmeträger vom Wärmetauscher 19 in den Kondensator 5. Dort nimmt der Wärmeträger Wärme aus der in den Kondensator 5 strömenden feuchten Luft auf. Dies bewirkt wiederum ein Kondensieren von Wasserdampf, der von der feuchten Luft mitgeführt wird, sowie von weiteren gasförmigen in der feuchten Luft vorliegenden Komponenten (hierzu zählen sämtliche Verbindungen, die innerhalb des Trocknungsraums 2 aus dem feuchten Gut austreten und von der feuchten Luft mitgeführt werden). Das erwärmte Wärmeträgermedium strömt anschließend zurück zum Wärmetauscher 19 und gibt dort Wärme an eine Wärmeträgerleitung 23 bzw. ein darin zirkulierendes Wärmeträgermedium ab. Beispielsweise könnte die Wärmeträgerleitung 23 mit der Wärmequelle 21 im Trocknungsraum 2 in Verbindung stehen.

Figur 2 zeigt ein Beispiel eines Kondensators 5. Der Kondensator 5 ist als Sprühkondensator ausgebildet und umfasst mehrere Sprühdüsen 17, über den eine Flüssigkeit 18 in den Innenraum des Kondensators 5 eingesprüht werden kann. Die Flüssigkeit 18 kommt hierbei mit der aus dem Trocknungsraum 2 stammenden feuchten Luft in Kontakt, die über einen entsprechenden Leitungsabschnitt 12 dem Kondensator 5 zugeführt wird.

Durch den Kontakt der feuchten Luft mit der eingesprühten Flüssigkeit 18 kommt es zu einem Kondensieren des in der Luft vorhandenen Wasserdampfs sowie weiterer flüchtiger Komponenten der feuchten Luft.

Die hierbei entstehende Flüssigkeit 18 sammelt sich am Boden des Kondensators 5 und kann dort über eine Leitung 24 einem Flüssigkeitstank zugeführt werden, der als Flüssigkeitsquelle 9 dient. Alternativ kann der Boden des Kondensators 5 direkt mit der Flüssigkeitsquelle 9 verbunden sein. Aus der Flüssigkeitsquelle 9 kann die Flüssigkeit 18 schließlich mit Hilfe einer Pumpe 25 abgezogen und erneut dem Kondensator 5 zugeführt werden. Vorzugsweise erfolgt im Vorfeld der erneuten Zuführung der Flüssigkeit 18 in den Kondensator 5 eine Abkühlung der Flüssigkeit 18, wie er im Zusammenhang mit Figur 1 erwähnt wurde. Insbesondere wäre in diesem Fall ein Wärmetauscher 19 vorhanden, der derart zu platzieren wäre, dass der Flüssigkeit 18 Wärme entzogen werden kann, nachdem sie den Kondensator 5 verlassen hat und bevor sie erneut in diesen eingesprüht wird.

Bevor die Flüssigkeit 18 aus der Flüssigkeitsquelle 9 erneut in den Kondensator 5 eingesprüht wird, ist es von Vorteil, wenn der Flüssigkeit 18 aus einem Laugentank 13 stammende Lauge sowie aus einem Oxidationsmitteltank 14 stammendes Oxidationsmittel zugegeben wird. Die Menge der jeweiligen Substanzen wird vorzugsweise in Abhängigkeit des pH-Werts oder des Redoxpotentials der Flüssigkeit innerhalb des Kondensators 5, der Leitung 24 oder der Flüssigkeitsquelle 9 gewählt.

Im Ergebnis wird der feuchten Luft innerhalb des Sprühkondensators eine Lauge sowie ein Oxidationsmittel zugeführt, wobei beide Substanzen verhindern, dass der im Kondensator 5 vorhandene Schwefel als elementarer Schwefel ausfällt und sich an Oberflächen des Kondensators 5 absetzt.

### Bezugszeichenliste

- 1: Klärschlamm
- 2: Trocknungsraum
- 3: Einlass
- 4: Auslass
- 5: Kondensator
- 6: Dosieranordnung
- 7: Laugenzufuhr
- 8: Kondensatablauf
- 9: Flüssigkeitsquelle
- 10: Oxidationsmittelzufuhr
- 11: Absaughaube
- 12: Leitungsabschnitt
- 13: Laugentank
- 14: Oxidationsmitteltank
- 15: pH-Sensor
- 16: Redox-Sensor
- 17: Sprühdüse
- 18: Flüssigkeit
- 19: Wärmetauscher
- 20: Flüssigkeitsleitung
- 21: Wärmequelle
- 22: Transportband
- 23: Wärmeträgerleitung
- 24: Leitung
- 25: Pumpe

## Patentansprüche

1. Trocknungsanlage zum Trocknen eines schwefelhaltigen feuchten Guts, insbesondere Klärschlamm (1),
- wobei die Trocknungsanlage einen Trocknungsraum (2) mit einem Einlass (3) für das feuchte Gut und einem Auslass (4) für das in dem Trocknungsraum (2) getrocknete Gut umfasst, und
- wobei die Trocknungsanlage einen Kondensator (5) umfasst, der derart mit dem Trocknungsraum (2) in Verbindung steht, dass beim Betrieb der Trocknungsanlage im Trocknungsraum (2) entstehende feuchte Luft aus dem Trocknungsraum (2) abführbar und dem Kondensator (5) zum Zwecke deren Trocknung zuführbar ist,
**dadurch gekennzeichnet,**
**dass** die Trocknungsanlage eine Dosieranordnung (6) mit einer Laugenzufuhr (7) und einer Oxidationsmittelzufuhr (10) umfasst, wobei die Dosieranordnung (6) ausgebildet ist, der feuchten Luft vor und/oder im Kondensator (5) aus der Laugenzufuhr (7) stammende Lauge sowie aus der Oxidationsmittelzufuhr (10) stammendes Oxidationsmittel zuzuführen.

2. Trocknungsanlage gemäß Anspruch 1, **dadurch gekennzeichnet, dass** die Trocknungsanlage einen oder mehrere Leitungsabschnitte (12) umfasst, über den bzw. die der Kondensator (5) mit dem Trocknungsraum (2) verbunden ist, wobei der oder die Leitungsabschnitte (12) derart ausgebildet ist bzw. sind, dass Luft im Umluftbetrieb vom Trocknungsraum (2) zum Kondensator (5) und von dort wieder zurück in den Trocknungsraum (2) bewegt werden kann.

3. Trocknungsanlage gemäß einem der vorangegangenen Ansprüche, **dadurch gekennzeichnet, dass** die Laugenzufuhr (7) einen Laugentank (13) umfasst und/oder dass die Oxidationsmittelzufuhr (10) einen Oxidationsmitteltank (14) umfasst.

4. Trocknungsanlage gemäß einem der vorangegangenen Ansprüche, **dadurch gekennzeichnet, dass** die Trocknungsanlage einen pH-Sensor (15) umfasst, mit dessen Hilfe der pH-Wert von im Kondensator (5) vorhandener oder in diesen einzubringender Flüssigkeit (18) messbar ist, und/oder dass die Trocknungsanlage einen Redox-Sensor (16) umfasst, mit dessen Hilfe das Redoxpotential der genannten Flüssigkeit (18) messbar ist.

5. Trocknungsanlage gemäß einem der vorangegangenen Ansprüche, **dadurch gekennzeichnet, dass** der pH-Sensor (15) und/oder der Redox-Sensor (16) in den Kondensator (5) oder in eine Flüssigkeitsleitung (20), die den Kondensator (5) mit einem Wärmetauscher (19) verbindet, integriert sind und direkt mit der Flüssigkeit (18) in Kontakt kommen.

6. Trocknungsanlage gemäß einem der vorangegangenen Ansprüche, **dadurch gekennzeichnet, dass** der Kondensator (5) als Sprühkondensator ausgebildet ist, wobei der Sprühkondensator Sprühdüsen (17) aufweist, mit deren Hilfe die genannte Flüssigkeit (18) im Kondensator (5) in die vom Trocknungsraum (2) kommende feuchte Luft eindüsbar ist.

7. Trocknungsanlage gemäß einem der vorangegangenen Ansprüche, **dadurch gekennzeichnet, dass** die Dosieranordnung (6) die Sprühdüsen (17) umfasst, wobei die Sprühdüsen (17) über eine Flüssigkeitsleitung (20) mit einer Flüssigkeitsquelle (9) in Verbindung steht, wobei die Flüssigkeitsleitung (20) und/oder die Sprühdüsen (17) mit der Laugenzufuhr (7) und/oder der Oxidationsmittelzufuhr (10) in Verbindung stehen, so dass Lauge und/oder Oxidationsmittel in die Flüssigkeit (18) einbringbar ist, bevor sie über die Sprühdüsen (17) in die feuchte Luft eingedüst wird.

8. Verfahren zum Trocknen von feuchtem Gut, insbesondere Klärschlamm (1), mit Hilfe einer Trocknungsanlage, vorzugsweise mit einer Trocknungsanlage gemäß einem der vorangegangenen Ansprüche,
- wobei das feuchte Gut über einen Einlass (3) in einen Trocknungsraum (2) der Trocknungsanlage eingebracht und nach dem Trocknungsvorgang über einen Auslass (4) aus dem Trocknungsraum (2) abgeführt wird, und
- wobei die beim Betrieb der Trocknungsanlage im Trocknungsraum (2) entstehende feuchte Luft aus dem Trocknungsraum (2) abgeführt, einem Kondensator (5) zugeführt und dort getrocknet wird,
**dadurch gekennzeichnet,**
**dass** der feuchten Luft vor und/oder im Kondensator (5) eine Lauge und ein Oxidationsmittel zugeführt werden.

9. Verfahren gemäß Anspruch 8, **dadurch gekennzeichnet, dass** die aus dem Trocknungsraum (2) abgeführte Luft nach dem Trocknen im Kondensator (5) zumindest teilweise wieder zurück in den Trocknungsraum (2) geleitet wird.

10. Verfahren gemäß Anspruch 8 oder 9, **dadurch gekennzeichnet, dass** der pH-Wert und/oder das Redoxpotential von im Kondensator (5) vorhandener bzw. in den Kondensator (5) einzubringender Flüssigkeit (18) ermittelt wird und die Dosierung der Lauge in Abhängigkeit des pH-Werts und/oder die Dosierung des Oxidationsmittels in Abhängigkeit des Redoxpotentials oder stöchiometrisch in Abhängigkeit der zugegebenen Lauge erfolgt.

11. Verfahren gemäß einem der Ansprüche 8 bis 10, **dadurch gekennzeichnet, dass** die Lauge und/oder das Oxidationsmittel der feuchten Luft innerhalb des Kondensators über Sprühdüsen (17) zugeführt wird.

12. Verfahren gemäß einem der Ansprüche 8 bis 11, **dadurch gekennzeichnet, dass** der Trocknungsraum (2) und der Kondensator (5) über einen Leitungsabschnitt (12) verbunden sind, über den die feuchte Luft dem Kondensator (5) zugeführt wird, wobei der Kondensator (5) eine Flüssigkeitsquelle (9) umfasst oder mit einer solchen verbunden ist, wobei beim Betrieb des Kondensators (5) innerhalb des Kondensators Flüssigkeit (18) aus der Flüssigkeitsquelle (9) mit der feuchten Luft in Kontakt gebracht wird, wobei die Messung des pH-Werts und/oder des Redoxpotentials in der Flüssigkeitsquelle (9) erfolgt.

13. Verfahren gemäß einem der Ansprüche 8 bis 12, **dadurch gekennzeichnet, dass** die Flüssigkeitsquelle (9) über eine Flüssigkeitsleitung (20) mit Sprühdüsen (17) des Kondensators (5) verbunden ist, wobei die Messung des pH-Werts und/oder des Redoxpotentials innerhalb der Flüssigkeitsleitung (20) erfolgt.

14. Verfahren gemäß einem der Ansprüche 8 bis 13, **dadurch gekennzeichnet, dass** die Zugabe der Lauge und/oder die Zugabe des Oxidationsmittels innerhalb der Flüssigkeitsleitung (20) oder innerhalb der Flüssigkeitsquelle (9) erfolgt.

## Claims

1. A drying system for drying a moist good comprising sulfur, particularly sewage sludge (1),
- the drying system comprising a drying space (2) having an inlet (3) for the moist good and an outlet (4) for the dried good dried in the drying space (2), and
- the drying system comprising a condenser (5) connected to the drying space (2) such that moist air arising in the drying space (2) when operating the drying system can be discharged from the drying space (2) and can be fed to the condenser (5) for the purpose of drying the same,
**characterized in that**
the drying system comprises a metering arrangement (6) having a lye infeed (7) and an oxidant infeed (10), wherein the metering arrangement (6) is implemented for feeding lye originating from the lye infeed (7) and oxidant originating from the oxidant infeed (10) to the moist air prior to and/or in the condenser (5).

2. The drying system according to claim 1, **characterized in that** the drying system comprises one or more line segments (12) by means of which the condenser (5) is connected to the drying space (2), wherein the line segment or segments (12) is or are implemented such that air can be displaced in circulation from the drying space (2) to the condenser (5) and back into the drying space (2) from the same again.

3. The drying system according to any one of the preceding claims, **characterized in that** the lye infeed (7) comprises a lye tank (13) and/or that the oxidant infeed (10) comprises an oxidant tank (14).

4. The drying system according to any one of the preceding claims, **characterized in that** the drying system comprises a pH sensor (15) by means of which the pH value of fluid (18) present in the condenser (5) or to be introduced into the same can be measured, and/or that the drying system comprises a redox sensor (16) by means of which the redox potential of said fluid (18) can be measured.

5. The drying system according to any one of the preceding claims, **characterized in that** the pH sensor (15) and/or the redox sensor (16) are integrated in the condenser (5) or in a fluid line (20) connecting the condenser (5) to a heat exchanger (19) and make contact directly with the fluid (18).

6. The drying system according to any one of the preceding claims, **characterized in that** the condenser (5) is implemented as a spray condenser, wherein the spray condenser comprises spray nozzles (17) by means of which said fluid (18) can be sprayed into the moist air coming from the drying space (2) in the condenser (5).

7. The drying system according to any one of the preceding claims, **characterized in that** the metering arrangement (6) comprises the spray nozzles (17), wherein the spray nozzles (17) are connected to a fluid source (9) by means of a fluid line (20), wherein the fluid line (20) and/or the spray nozzles (17) are connected to the lye infeed (7) and/or to the oxidant infeed (10), so that lye and/or oxidant can be introduced into the fluid (18) before said fluid is sprayed into the moist air via the spray nozzles (17).

8. A method for drying a moist good, particularly sewage sludge (1), by means of a drying system, preferably by means of a drying system according to any one of the preceding claims,
- the moist good being introduced into a drying space (2) of the drying system via an inlet (3) and being discharged out of the drying space (2) via an outlet (4) after the drying process, and
- the moist air arising in the drying space (2) when operating the drying system is discharged out of the drying space (2), fed into a condenser (5), and dried in the same,
**characterized in that**
a lye and an oxidant are fed into the moist air prior to and/or in the condenser (5).

9. The method according to claim 8, **characterized in that** the air discharged out of the drying space (2) after drying is at least partially fed back into the drying space (2) after drying in the condenser (5).

10. The method according to claim 8 or 9, **characterized in that** the pH value and/or the redox potential of fluid (18) present in the condenser (5) or to be introduced into the condenser (5) is determined, and the metering of the lye takes place as a function of the pH value and/or the metering of the oxidant takes place as a function of the redox potential or stoichiometrically as a function of the introduced lye.

11. The method according to any one of the claims 8 through 10, **characterized in that** the lye and/or the oxidant is fed to the moist air within the condenser via spray nozzles (17).

12. The method according to any one of the claims 8 through 11, **characterized in that** the drying space (2) and the condenser (5) are connected by means of a line segment (12) via which the moist air is fed into the condenser (5), wherein the condenser (5) comprises a fluid source (9) or is connected to such a source, wherein fluid (18) from the fluid source (9) is brought into contact with the moist air within the condenser when operating the condenser (5), wherein the measuring of the pH value and/or of the redox potential takes place in the fluid source (9).

13. The method according to any one of the claims 8 through 12, **characterized in that** the fluid source (9) is connected to spray nozzles (17) of the condenser (5) via a fluid line (20), wherein the measuring of the pH value and/or of the redox potential takes place within the fluid line (20).

14. The method according to any one of the claims 8 through 13, **characterized in that** the introducing of the lye and/or the introducing of the oxidant takes place within the fluid line (20) or within the fluid source (9).

## Revendications

1. Installation de séchage pour sécher une matière humide contenant du soufre, en particulier des boues d'épuration (1),
- l'installation de séchage comprenant un espace de séchage (2) avec une entrée (3) pour la matière humide et une sortie (4) pour la matière séchée dans l'espace de séchage (2), et
- l'installation de séchage comprenant un condenseur (5) qui est en liaison avec l'espace de séchage (2) de sorte que l'air humide produit dans l'espace de séchage (2) pendant le fonctionnement de l'installation de séchage peut être évacué de l'espace de séchage (2) et acheminé au condenseur (5) en vue de son séchage,
**caractérisée en ce que**
l'installation de séchage comprend un agencement de dosage (6) avec une alimentation (7) en lessive et une alimentation (10) en agent oxydant, l'agencement de dosage (6) étant conçu pour amener à l'air humide en amont du et/ou dans le condenseur (5) de la lessive provenant de l'alimentation (7) en lessive ainsi que de l'agent oxydant provenant de l'alimentation (10) en agent oxydant.

2. Installation de séchage selon la revendication 1, **caractérisée en ce que** l'installation de séchage comprend un ou plusieurs tronçons de conduites (12) par lequel ou lesquels le condenseur (5) est relié à l'espace de séchage (2), le ou les tronçons de conduites (12) étant conçu(s) de sorte que de l'air peut être mis en mouvement en mode de recirculation d'air, de l'espace de séchage (2) au condenseur (5) et, de là, renvoyé de nouveau dans l'espace de séchage (2).

3. Installation de séchage selon l'une quelconque des revendications précédentes, **caractérisée en ce que** l'alimentation (7) en lessive comprend un réservoir (13) de lessive et/ou **en ce que** l'alimentation (10) en agent oxydant comprend un réservoir (14) d'agent oxydant.

4. Installation de séchage selon l'une quelconque des revendications précédentes, **caractérisée en ce que** l'installation de séchage comprend un capteur de pH (15) à l'aide duquel la valeur pH du liquide (18) présent dans le condenseur (5) ou à introduire dans celui-ci peut être mesurée, et/ou **en ce que** l'installation de séchage comprend un capteur d'oxydoréduction (16) à l'aide duquel le potentiel d'oxydoréduction dudit liquide (18) peut être mesuré.

5. Installation de séchage selon l'une quelconque des revendications précédentes, **caractérisée en ce que** le capteur de pH (15) et/ou le capteur d'oxydoréduction (16) sont intégrés dans le condenseur (5) ou dans une conduite de liquide (20) qui relie le condenseur (5) à un échangeur de chaleur (19) et sont en contact direct avec le liquide (18).

6. Installation de séchage selon l'une quelconque des revendications précédentes, **caractérisée en ce que** le condenseur (5) est conçu sous la forme d'un condenseur à pulvérisation, le condenseur à pulvérisation présentant des buses de pulvérisation (17) à l'aide desquelles ledit liquide (18) peut être injecté, dans le condenseur (5), dans l'air humide provenant de l'espace de séchage (2).

7. Installation de séchage selon l'une quelconque des revendications précédentes, **caractérisée en ce que** l'agencement de dosage (6) comprend les buses de pulvérisation (17), les buses de pulvérisation (17) étant en communication avec une source (9) de liquide via une conduite (20) de liquide, la conduite (20) de liquide et/ou les buses de pulvérisation (17) étant en communication avec l'alimentation (7) en lessive et/ou l'alimentation (10) en agent oxydant, de sorte que la lessive et/ou l'agent oxydant peuvent/peut être introduit(e/s) dans le liquide (18) avant que celui-ci ne soit injecté dans l'air humide via les buses de pulvérisation (17).

8. Procédé pour sécher une matière humide, en particulier des boues d'épuration (1), à l'aide d'une installation de séchage, de préférence à l'aide d'une installation de séchage selon l'une quelconque des revendications précédentes,
- la matière humide étant introduite dans un espace de séchage (2) de l'installation de séchage via une entrée (3) et étant évacuée de l'espace de séchage (2) via une sortie (4) après le processus de séchage, et
- l'air humide produit dans l'espace de séchage (2) pendant le fonctionnement de l'installation de séchage étant évacué de l'espace de séchage (2), amené à un condenseur (5) et y étant séché,
**caractérisé en ce qu'**
une lessive et un agent oxydant sont amenés à l'air humide en amont du et/ou dans le condenseur (5).

9. Procédé selon la revendication 8, **caractérisé en ce que** l'air évacué de l'espace de séchage (2) est renvoyé au moins partiellement dans l'espace de séchage (2) après avoir été séché dans le condenseur (5).

10. Procédé selon la revendication 8 ou 9, **caractérisé en ce que** la valeur pH et/ou le potentiel d'oxydoréduction du liquide (18) présent dans le condenseur (5) ou à introduire dans le condenseur (5) est/sont déterminé(s) et le dosage de la lessive est effectué en fonction de la valeur pH et/ou le dosage de l'agent oxydant est effectué en fonction du potentiel d'oxydoréduction ou par voie stoechiométrique en fonction de la lessive ajoutée.

11. Procédé selon l'une quelconque des revendications 8 à 10, **caractérisé en ce que** la lessive et/ou l'agent oxydant sont/est introduit(s)(e) à l'air humide à l'intérieur du condenseur via des buses de pulvérisation (17).

12. Procédé selon l'une quelconque des revendications 8 à 11, **caractérisé en ce que** l'espace de séchage (2) et le condenseur (5) sont reliés par un tronçon de conduite (12) par lequel l'air humide est amené au condenseur (5), le condenseur (5) comprenant une source (9) de liquide ou étant relié à une telle source, du liquide (18) provenant de la source (9) de liquide étant mis en contact avec l'air humide à l'intérieur du condenseur pendant le fonctionnement du condenseur (5), la mesure de la valeur pH et/ou du potentiel d'oxydoréduction étant effectuée dans la source (9) de liquide.

13. Procédé selon l'une quelconque des revendications 8 à 12, **caractérisé en ce que** la source (9) de liquide est reliée à des buses de pulvérisation (17) du condenseur (5) via une conduite (20) de liquide, la mesure de la valeur pH et/ou du potentiel d'oxydoréduction étant effectuée à l'intérieur de la conduite (20) de liquide.

14. Procédé selon l'une quelconque des revendications 8 à 13, **caractérisé en ce que** l'ajout de la lessive et/ou l'ajout de l'agent oxydant sont/est effectué(s) à l'intérieur de la conduite (20) de liquide ou à l'intérieur de la source (9) de liquide.
